# EUROPÄISCHE PATENTSCHRIFT

(11) **EP 4 360 195 B1**
(45) Veröffentlichungstag und Bekanntmachung des Hinweises auf die Patenterteilung: **21.05.2025**
(21) Anmeldenummer: 21736573.3
(22) Anmeldetag: 22.06.2021
(51) Int. Cl.: H02K 1/32, H02K 7/04

(54) **ROTOR FÜR EINE ELEKTRISCHE MASCHINE**
ROTOR FOR AN ELECTRIC MACHINE
ROTOR POUR UNE MACHINE ÉLECTRIQUE

(43) Veröffentlichungstag der Anmeldung: 01.05.2024
(73) Patentinhaber: Pierburg GmbH, 41460 Neuss (DE)
(72) Erfinder: VON PFINGSTEN, Georg, 41460 Neuss (DE); DEWENTER, Stefan, 41460 Neuss (DE); BIGALKE, Stephan, 41460 Neuss (DE)
(74) Vertreter: terpatent PartGmbB
(86) Internationale Anmeldenummer: PCT/EP2021/067012
(87) Internationale Veröffentlichungsnummer: WO 2022/268302

(56) Entgegenhaltungen:
- CN-A- 111 969 792
- DE-A1- 102008 020 426
- DE-A1- 102019 216 982
- US-A- 5 986 366
- US-A1- 2004 222 714

## Beschreibung

Die Erfindung betrifft einen Rotor für eine elektrische Maschine, mit einem Rotorblechpaket mit mehreren Unterblechpaketen, welche jeweils eine Vielzahl von in Stapelrichtung gestapelten Rotorblechen und jeweils mindestens eine in Stapelrichtung ersteckende Durchgangsöffnung aufweisen, wobei die Durchgangsöffnungen der Unterblechpakete sich in Umfangsrichtung überlagern und gemeinsam mindestens einen Kühlmittelkanal bilden.

Elektrische Maschinen, insbesondere elektrische Maschinen hoher Leistungsklassen/Leistungsdichte, wie beispielsweise eine elektrische Maschine eines Elektrofahrzeugs, weisen im Betrieb eine relativ hohe Verlustwärme auf, welche im Hinblick auf eine verbesserte Effizienz und im Hinblick auf eine höhere Lebensdauer der elektrischen Maschine mittels kühltechnischer Maßnahmen abgeführt werden sollte. Üblicherweise wird die in einem Rotor der elektrischen Maschine erzeugte Verlustwärme über einen Luftspalt zwischen dem Rotor und einem Stator der elektrischen Maschine an den Stator abgeleitet und von dort aus durch eine Kühlung des Stators an ein Gehäuse der elektrischen Maschine oder an ein den Stator umströmendes Kühlmedium abgegeben. Ein weiterer Teil der an dem Rotor vorliegenden Verlustwärme kann über die Rotorwelle abgeleitet werden. Zur Abführung der Wärme von der Rotorwelle weist diese üblicherweise einen Kühlmittelkanal auf, welcher mit einem Kühlreislauf fluidisch verbunden ist und von einem Kühlmittel durchströmt ist. Nachteilig an einer Wärmeabführung mittels eines ausschließlich in der Rotorwelle ausgebildeten Kühlmittelkanals ist, dass die Wärmeübertragungsfläche zwischen dem Kühlmittel und der Rotorwelle relativ klein ist, wodurch eine relativ geringe Kühlwirkung erzielt wird.

Eine weitere Möglichkeit zur Abführung der Verlustwärme von dem Rotor ist, in einem Rotorblechpaket mehrere in Stapelrichtung des Rotorblechpakets, d.h. in Axialrichtung der elektrischen Maschine und des Rotors, erstreckende Kühlmittelkanäle vorzusehen, wodurch die Wärmeübertragungsfläche im Gegensatz zu einem ausschließlich durch die Rotorwelle verlaufenden Kühlmittelkanal erhöht wird und das Rotorblechpaket direkt gekühlt wird, so dass die Kühlwirkung erhöht werden kann und die Verlustwärme direkt an der Stelle ihrer Entstehung abgeführt werden kann. Die DE 10 2016 210 930 A1 offenbart beispielsweise ein Rotorblechpaket mit einer Mehrzahl von gestapelten Rotorblechen und mehreren in Stapelrichtung erstreckenden Kühlmittelkanälen. Dabei sind die Kühlmittelkanäle durch mehrere Durchgangsöffnungen in den Rotorblechen ausgeführt, wobei die Rotorbleche zumindest im Bereich des Kühlmittelkanals identisch ausgeführt sind und derart in Umfangsrichtung versetzt zueinander angeordnet, dass mehrere, spiralförmige Kühlmittelkanäle ausgebildet werden. Alternativ können die Rotorbleche in mehrere, in Stapelrichtung aneinander anschließende Teilblechpakete unterteilt sein, wobei die Teilblechpakete in Umfangsrichtung versetzt zueinander angeordnet sind und dadurch die Kühlmittelkanäle einen im Wesentlichen spiralförmigen Verlauf aufweisen. In allen genannten Ausführungen strömt das Kühlmittel an einem der beiden Axialenden des Rotorblechpakets in den Kühlmittelkanal ein und strömt an dem anderen Axialende des Rotorblechpakets aus dem Kühlmittelkanal aus. Damit sind der Kühlmitteleinlass und der Kühlmittelauslass des Kühlmittelkanals an zwei zueinander entgegengesetzten Axialenden des Rotorblechpakets ausgeführt.

US 2004/222714 A1 offenbart einen Rotor für eine elektrische Maschine, mit einem Rotorblechpaket mit mehreren Unterblechpaketen, welche jeweils eine Vielzahl von in Stapelrichtung gestapelten Rotorblechen und jeweils mindestens eine in Stapelrichtung ersteckende Durchgangsöffnung aufweisen, wobei die Durchgangsöffnungen der Unterblechpakete sich in Umfangsrichtung überlagern und gemeinsam mindestens einen Kühlmittelkanal bilden, wobei ein erstes Teilblechpaket eine einen Kühlmitteleinlass bildende erste Durchgangsöffnung aufweist.

Nachteilig an allen Ausführungen ist, dass die Wärmeübertragungsfläche relativ gering ist und dadurch entweder eine zusätzliche Kühlung erforderlich ist, um die im Rotorblechpaket im Betrieb erzeugte Verlustwärme abzuführen, oder die elektrische Maschine in ihrer Leistungsklasse beschränkt ist.

Es stellt sich daher die Aufgabe, einen Rotor bereitzustellen, durch welchen auf eine einfache und kostengünstige Weise die Kühlung des Rotors erhöht werden kann.

Diese Aufgabe wird durch einen Rotor für eine elektrische Maschine mit den Merkmalen des Hauptanspruchs 1 gelöst.

Dadurch, dass ein erstes Teilblechpaket eine einen Kühlmitteleinlass bildende erste Durchgangsöffnung und eine einen Kühlmittelauslass bildende, zweite Durchgangsöffnung aufweist, wobei beide Durchgangsöffnungen des ersten Teilblechpakets sich mit einer einzigen, dritten Durchgangsöffnung eines zweiten Teilblechpakets überlagern, wobei die dritte Durchgangsöffnung des zweiten Teilblechpakets an der dem ersten Teilblechpaket abgewandten Seite geschlossen ist, wird auf eine einfache und preisgünstige Weise die Wärmeübertragungsfläche zwischen dem Kühlmittel und dem Rotorblechpaket und dadurch die Kühlwirkung erhöht. Dabei weist der Kühlmittelkanal einen U-förmigen Verlauf auf, wobei das Kühlmittel an einem ersten Axialende des Rotorblechpakets in den Kühlmittelkanal einströmt und die erste Durchgangsöffnung des ersten Teilblechpakets durchströmt. An dem gegenüberliegenden Ende der ersten Durchgangsöffnung schließt die dritte Durchgangsöffnung des zweiten Teilblechpakets an, wobei durch die dritte Durchgangsöffnung das Kühlmittel um 180° umgelenkt wird. Die zweite Durchgangsöffnung des ersten Teilblechpakets schließt an die dritte Durchgangsöffnung an und erstreckt sich bis zum ersten Axialende des Rotorblechpakets. Damit bildet die erste Durchgangsöffnung einen Kühlmitteleinlass, die zweite Durchgangsöffnung bildet einen Kühlmittelauslass und die dritte Durchgangsöffnung bildet eine 180° Umlenkung des Kühlmittelstroms.

Durch eine derartige Ausgestaltung des Kühlmittelkanals kann die Kühlwirkung des Rotors erhöht werden, wobei die Wärmeübertragungsfläche im Vergleich zu geradlinig verlaufenden Kühlmittelkanälen erhöht wird. Der U-förmige Verlauf des Kühlmittelkanals kann einfach und kostengünstig realisiert werden, indem lediglich ein erstes Teilblechpaket mit der ersten Durchgangsöffnung und der zweiten Durchgangsöffnung sowie ein zweites Teilblechpaket mit der dritten Durchgangsöffnung miteinander kombiniert werden, wobei die beiden Teilblechpakete durch ein einfaches und kostengünstiges Stanzverfahren verstellt werden können.

Vorzugsweise ist ein drittes Teilblechpaket vorgesehen, welches an der dem ersten Teilblechpaket abgewandten Seite des zweiten Teilblechpakets angeordnet ist, wobei das dritte Teilblechpaket im Bereich der dritten Durchgangsöffnung des zweiten Teilblechpakets eine geschlossene Fläche aufweist. Dadurch kann die dritte Durchgangsöffnung an ihrer dem ersten Teilblechpaket abgewandten Seite einfach verschlossen werden, wobei keine zusätzliche Komponente zum Verschließen der dritten Durchgangsöffnung erforderlich ist. Vorzugsweise sind die Rotorblechpakete miteinander verklebt, wodurch eine fluiddichte Verbindung zwischen den Rotorblechen gewährleistet werden kann. Alternativ können die Rotorbleche miteinander Stanzpaketiert sein. Zur Vermeidung eines Leckagepfads des Kühlmittels zwischen den einzelnen Rotorblechen kann relativ zum Kühlmittelkanal radial innen und/oder außen eine Prägung an den Rotorblechen vorgesehen werden, wodurch eine Abdichtung der Spalte zwischen zwei benachbarten Rotorblechen geschaffen wird.

In einer bevorzugten Ausgestaltung ist zwischen dem ersten Teilblechpaket und dem zweiten Teilblechpaket mindestens ein weiteres Teilblechpaket angeordnet, wobei das mindestens eine weitere Teilblechpaket eine erste Durchgangsöffnung und eine zweite Durchgangsöffnung aufweist, welche sich mit den Durchgangsöffnungen des ersten Blechpakets und der Durchgangsöffnung des zweiten Teilblechpakets derart überlagern, dass die Durchgangsöffnungen aller Teilblechpakete den gemeinsamen Kühlmittelkanal begrenzen. Dadurch kann die Wärmeübertragungsfläche zwischen dem Kühlmittel und dem Rotorblechpaket vergrößert werden. Vorzugsweise sind die Durchgangsöffnungen des weiteren Teilblechpakets in Umfangsrichtung zu den beiden Durchgangsöffnungen des ersten Teilblechpakets versetzt angeordnet, wodurch die Schenkelabschnitte des U-förmigen Kühlmittelkanals zusätzlich eine Windung um die Drehachse des Rotors aufweisen. Dadurch kann die Wärmeübertragungsfläche zwischen dem Kühlmittel und dem Rotorblechpaket nochmals vergrößert werden.

Vorzugsweise sind alle Teilblechpakete identisch ausgeführt, wobei jedes Teilblechpaket jeweils mindestens eine erste Durchgangsöffnung, mindestens eine zweite Durchgangsöffnung und mindestens eine dritte Durchgangsöffnung aufweisen, wobei die Teilblechpakete in Umfangsrichtung derart versetzt zueinander angeordnet sind, dass die Durchgangsöffnungen der Teilblechpakete gemeinsam mindestens einen Kühlmittelkanal begrenzen. Dadurch können alle Rotorbleche und alle Rotorblechpakete durch ein einziges Stanzwerkzeug hergestellt werden, wodurch der Herstellungsaufwand des Rotorblechpakets reduziert wird.

Vorzugsweise ist an dem der ersten Teilblechpaket abgewandten Seite des zweiten Teilblechpakets eine erste Wuchtscheibe angeordnet, wobei die erste Wuchtscheiben mindestens einen radial erstreckende und mit einem Kühlkreislauf fluidisch verbindbaren Kühlmittelversorgungskanal und einen Kühlmittelabführkanal aufweist, wobei der Kühlmittelversorgungskanal und der Kühlmittelabführkanal mit dem Kühlmittelkanal fluidisch verbunden ist. Dadurch kann der Kühlmittelkanal auf eine kostengünstige und bauraumsparende Weise mit einem Kühlkreislauf verbunden werden, wobei dafür keine zusätzlichen Komponenten erforderlich sind. Die erste Wuchtscheibe übernimmt damit sowohl das Auswuchten des Rotors als auch die fluidische Verbindung zwischen dem Kühlkreislauf und dem Kühlmittelkanal. Vorzugsweise ist der Kühlmittelabführkanal als axiale Durchgangsöffnung ausgeführt, wobei das Kühlmittel axial durch die erste Wuchtscheibe durchströmt und durch die Rotation des Rotors weggeschleudert wird.

In einer bevorzugten Ausgestaltung weist die Wuchtscheibe an einer dem ersten Teilblechpaket zugewandten Seite mindestens eine radial erstreckende Nut auf, wobei die Nut und eine der Wuchtscheibe zugewandten Fläche des Teilblechpakets den mindestens einen radial erstreckenden Kühlmittelversorgungskanal begrenzen. Dadurch kann der Kühlmittelversorgungskanal einfach realisiert werden, wobei keine aufwendig herzustellenden Bohrungen an der ersten Wuchtscheibe hergestellt werden müssen.

In einer bevorzugten Ausgestaltung weisen die Teilblechpakete mehrere erste Durchgangsöffnungen, mehrere zweite Durchgangsöffnungen und mehrere dritte Durchgangsöffnungen auf, wobei die Teilpakete derart in Umfangsrichtung versetzt zueinander angeordnet sind, dass mindestens ein erster Kühlmittelkanal und mindestens ein zweiter Kühlmittelkanal ausgebildet sind, wobei der erste Kühlmittelkanal durch die erste Durchgangsöffnung, die zweite Durchgangsöffnung zumindest eines Teilblechpakets und die dritte Durchgangsöffnungen eines anderen Teilblechpakets gebildet ist und der zweite Kühlmittelkanal ausschließlich durch die dritten Durchgangsöffnungen zumindest zweier Teilblechpakete oder durch die ersten oder zweite Durchgangsöffnung zumindest eines Teilblechpakets und eine dritte Durchgangsöffnung zumindest eines anderen Teilblechpakets gebildet ist, wobei der erste Kühlmittelkanal an einem einzigen Axialende einen Kühlmitteleinlass und einen Kühlmittelauslass aufweist und der zweite Kühlmittelkanal an einem der beiden Axialenden einen Kühlmitteleinlass und an dem anderen Axialende einen Kühlmittelauslass aufweist. Dadurch kann die Höhe der Kühlung des Rotorblechpakets erhöht werden.

In einer bevorzugten Ausgestaltung ist an einem dem zweiten Teilblechpaket abgewandten Seite des ersten Teilblechpakets eine zweite Wuchtscheibe angeordnet, wobei die zweite Wuchtscheibe einen Kühlmittelabführkanal aufweist, wobei der Kühlmittelabführkanal und ein an der ersten Wuchtscheibe vorgesehener Kühlmittelversorgungskanal mit dem zweiten Kühlmittelkanal fluidisch verbunden sind. Dadurch kann das Kühlmittel einfach und kostengünstig dem Kühlmittelkanal zugeführt und vom Kühlmittelkanal abgeführt werden, wobei dafür keine zusätzlichen Komponenten erforderlich sind. Der Kühlmittelabführkanal ist als Durchgangsöffnung ausgeführt, so dass das Kühlmittel durch die Rotation des Rotors weggeschleudert wird.

Vorzugsweise ist eine Rotorwelle vorgesehen, wobei an einer Außenumfangsfläche der Rotorwelle das Rotorblechpaket befestigt ist, wobei die Rotorwelle einen Kühlmittelzuführkanal aufweist, welcher über den Kühlmittelversorgungskanal mit dem Kühlmittelkanal fluidisch verbunden ist. Damit wird das Kühlmittel über die Rotorwelle und die erste Wuchtscheibe dem Kühlmittelkanal zugeführt, wobei dafür keine zusätzlichen Bauteile erforderlich sind. Dadurch kann der Rotor einfach und bauraumsparend ausgeführt werden. In einer bevorzugten Ausgestaltung weist der Kühlmittelzuführkanal einen von einer Stirnseite erstreckenden Axialabschnitt und einen Radialabschnitt auf, wobei der Radialabschnitt sich von dem Axialabschnitt bis zu der Außenumfangsfläche der Rotorwelle erstreckt.

Vorzugsweise sind eine Mehrzahl von in Umfangsrichtung zueinander versetzten Magnet-Durchgangsöffnungen zur Aufnahme von Permanentmagneten vorgesehen, wobei die Magnet-Durchgangsöffnungen in einem gemeinsamen Herstellungsschritt, d.h. in einem gemeinsamen Stanzvorgang, mit den Durchgangsöffnungen, welche den Kühlmittelkanal bilden, hergestellt werden.

Ein Ausführungsbeispiel eines erfindungsgemäßen Rotors ist in den Figuren dargestellt und wird nachfolgend beschrieben.
Figur 1 zeigt ein Rotorblechpaket eines Rotors in perspektivischer Ansicht,
Figur 2 zeigt beispielhaft einen Verlauf zweier Kühlmittelkanäle,
Figur 3 zeigt den Rotor,
Figur 4 zeigt eine erste Wuchtscheibe des Rotors aus Figur 3, und
Figur 5 zeigt eine zweite Wuchtscheibe des Rotors aus Figur 3.

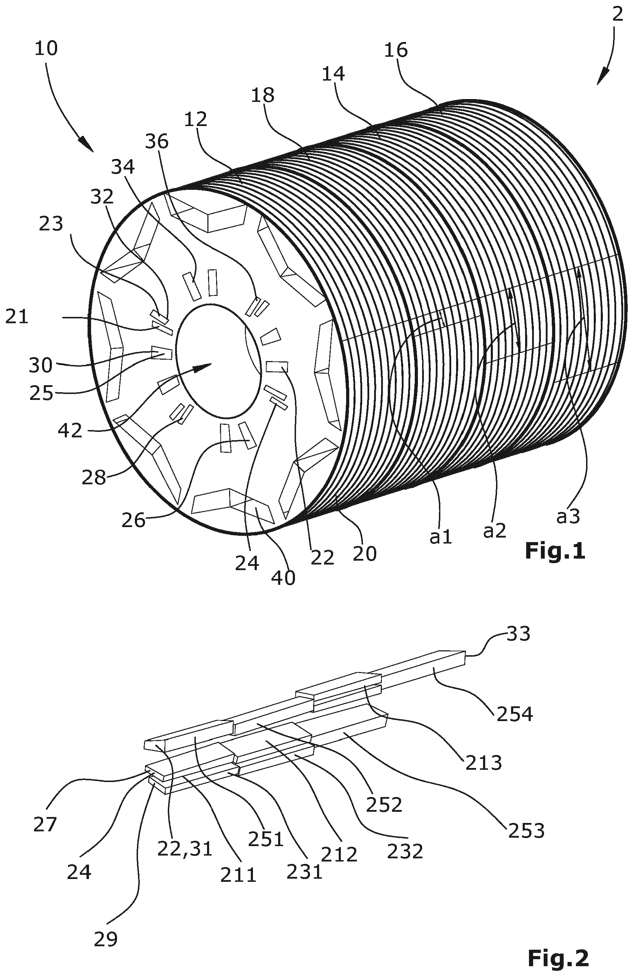

Die Figur 1 zeigt ein Rotorblechpaket 10 eines Rotors 2. Das Rotorblechpaket 10 weist mehrere Teilblechpaket 12, 14, 16, 18 auf, welche jeweils eine Vielzahl von in Axialrichtung des Rotors 2, welche die Stapelrichtung bildet, gestapelte Rotorbleche 20 aufweisen. Ein erstes Teilblechpaket 12 bildet ein erstes Axialende des Rotorblechpakets 10. An das erste Teilblechpaket 12 schließt in Stapelrichtung ein zweites Teilblechpaket 14 an, wobei zwischen dem ersten Teilblechpaket 12 und dem zweiten Teilblechpaket 14 ein weiteres Teilblechpaket 18 angeordnet ist. An das zweite Teilblechpaket 14 schließt in Stapelrichtung der Rotorbleche 20 ein drittes Teilblechpaket 16 an.

Alle Teilblechpakete 12, 14, 16, 18 weisen im radial äußeren Bereich mehrere Magnet-Durchgangsöffnungen 40 auf, welche sich in Stapelrichtung der Rotorbleche 20, d.h. in Axialrichtung des Rotors 2, zwischen den jeweiligen Stirnseiten der Teilblechpakete 12, 14, 16, 18 erstrecken. Die Magnet-Durchgangsöffnungen 40 sind paarweise ausgeführt und über den gesamten Umfang des Rotorblechpakets 10 verteilt angeordnet, wobei zwei Magnet-Durchgangsöffnungen 40 jeweils ein V-förmiges Paar bilden.

Die Teilblechpakete 13, 14, 16, 18 weisen außerdem jeweils mehrere Durchgangsöffnungen 21, 23, 25 auf, welche sich in Stapelrichtung der Rotorbleche 20 zwischen den jeweiligen Stirnseiten der Teilblechpakete 12, 14, 16, 18 erstrecken und über den Umfang verteilt angeordnet sind. Jeweils eine erste Durchgangsöffnung 21 und eine zweite Durchgangsöffnung 23 bilden ein zusammengehöriges Paar. Zusätzlich sind mehrere dritte Durchgangsöffnung 25 vorgesehen, welche im Querschnitt größer ausgeführt sind als die erste Durchgangsöffnung 21 und die zweite Durchgangsöffnung 23. Die Durchgangsöffnungen 21, 23, 25 sind derart über den Umfang angeordnet, dass jeweils zwei dritte Durchgangsöffnungen 25 zwischen zwei Paaren aus einer ersten Durchgangsöffnung 21 und einer zweiten Durchgangsöffnung 23 angeordnet sind.

Die Teilblechpakete 12, 14, 16, 18 sind derart in Umfangsrichtung versetzt zueinander angeordnet, dass sich die ersten Durchgangsöffnungen 21, die zweiten Durchgangsöffnungen 23 und die dritten Durchgangsöffnungen der einzelnen Teilblechpakete 12, 14, 16, 18 in Umfangsrichtung überlagern. Dabei ist das zwischen dem ersten Teilblechpaket 12 und dem zweiten Teilblechpaket 14 angeordnete weitere Teilblechpaket 18 um einen Winkel a1 relativ zum ersten Teilblechpaket 12 versetzt angeordnet. Das zweite Teilblechpaket 14 ist um einen Winkel a2 und das dritte Teilblechpaket 16 ist um einen Winkel a3 relativ zum ersten Teilblechpaket 12 versetzt angeordnet. Die Winkel a1, a2 und a3 sind derart gewählt, dass sich einige Durchgangsöffnungen 21, 23, 25 der Teilblechpakete 12, 14, 16, 18 in Umfangsrichtung derart überlagern, dass jeweils ein Kühlmittelkanal 22, 24, 26, 28, 30, 32, 34, 36 mit einem Kühlmitteleinlass 27, 31 und einem Kühlmittelauslass 29, 33 ausbildet. Dabei sind mehrere erste, u-förmige Kühlmittelkanäle 24, 28, 32, 36 und mehrere zweite, gradlinige Kühlmittelkanäle 22, 26, 30, 34 vorgesehen. Alternativ oder zusätzlich können die Teilblechpakete 14, 18 um 180° um eine Hochachse verdreht angeordnet werden.

Die Verläufe des ersten Kühlmittelkanals 24 und des zweiten Kühlmittelkanals 22 sind exemplarisch in Figur 2 gezeigt. Beim ersten Kühlmittelkanal 24 überlagern sich jeweils eine erste Durchgangsöffnung 211, 212 und eine zweite Durchgangsöffnung 231, 232 der Teilblechpakete 12, 18 und eine dritte Durchgangsöffnung 253 des zweiten Teilblechpakets 14 in Umfangsrichtung. Das dritte Teilblechpaket 16 ist derart in Umfangsrichtung angeordnet, dass im Bereich der dritten Durchgangsöffnung 253 des zweiten Teilblechpakets 14 eine geschlossene, ebene Fläche angeordnet ist, wodurch die dritte Durchgangsöffnung 253 an dem dritten Teilblechpaket 16 zugewandten Axialende geschlossen ist. Der Kühlmitteleinlass 27 und der Kühlmittelauslass 29 der U-förmigen Kühlmittelkanäle 24, 28, 32, 36 sind an einem gemeinsamen ersten Axialende des Rotorblechpakets 10 angeordnet, wobei der Kühlmitteleinlass 27 durch die erste Durchgangsöffnung 21 gebildet ist und der Kühlmittelauslass 29 durch die zweite Durchgangsöffnung 23 gebildet ist. Der zweite Kühlmittelkanal 22 erstreckt sich von dem ersten Axialende des Rotorblechpakets 10 bis zum entgegengesetzten, zweiten Axialende des Rotorblechpakets 10. Dabei überlagern sich die dritten Durchgangsöffnungen 251, 252, 254 der Teilblechpakete 12, 18, 16 und eine erste Durchgangsöffnung 213 des zweiten Teilblechpakets 14. Ein Kühlmitteleinlass 31 des zweiten Kühlmittelkanals 22 ist durch die dritte Durchgangsöffnung 251 des ersten Teilblechpakets 12 gebildet und ein Kühlmittelauslass 33 ist durch die dritte Durchgangsöffnung 254 des dritten Teilblechpakets 16 gebildet.

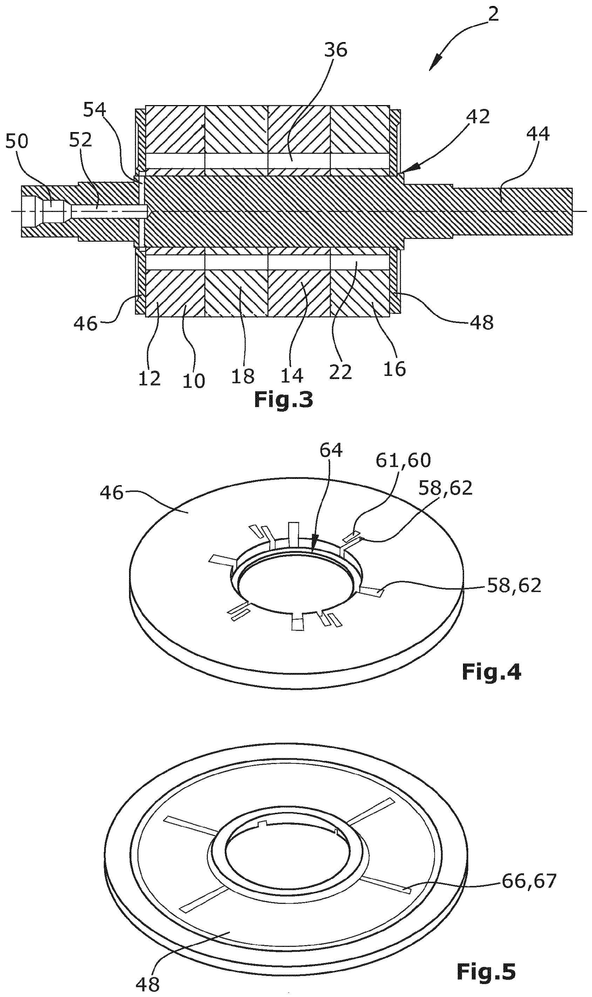

Die Figur 3 zeigt einen Rotor 2 mit einer Rotorwelle 44, welche in einer Zentralöffnung 42 des Rotorblechpakets 10 angeordnet ist. An den beiden Axialenden des Rotorblechpakets 10 ist jeweils eine Wuchtscheibe 46, 48 angeordnet. Eine erste Wuchtscheibe 46 ist in Figur 4 gezeigt, wobei die erste Wuchtscheibe 46 über den Umfang verteilte, sich von der Innenumfangsfläche radial erstreckende Nuten 62 und Durchgangsöffnungen 61 aufweist. Die Nuten 62 überlagern sich mit den ersten Durchgangsöffnungen 21 und den dritten Durchgangsöffnungen 25 des ersten Teilblechpakets 12 und bilden jeweils mit der der ersten Wuchtscheibe 46 zugewandten Fläche des ersten Teilblechpakets 12 einen Kühlmittelversorgungskanal 58. Die Durchgangsöffnungen 61 überlagern sich in Umfangsrichtung mit den zweiten Durchgangsöffnungen 23 des ersten Teilblechpakets 12 und bilden einen Kühlmittelabführkanal 60. Eine zweite Wuchtscheibe 48 ist in Figur 5 gezeigt und weist mehrere über den Umfang verteilte Durchgangsöffnungen 66 auf, welche einen Kühlmittelabführkanal 67 bilden.

Im Betrieb der elektrischen Maschine entsteht in dem Rotor 2 eine relativ hohe Verlustwärme, welche durch das durch die Kühlmittelkanäle 22, 24, 26, 28, 30, 32, 34, 36 strömende Kühlmittel abgeführt wird. Dabei strömt das Kühlmittel über einen an der Rotorwelle 44 vorgesehenen Kühlmittelzuführkanal 50 und über die durch die erste Wuchtscheibe 46 begrenzten Kühlmittelversorgungskanäle 58 in die Kühlmittelkanäle 22, 24, 26, 28, 30, 32, 34, 36. Die Wuchtscheibe 46 weist an einer Innenumfangsfläche eine umlaufende Nut 64 und der Kühlmittelzuführkanal 50 weist einen Axialabschnitt 52 sowie einen Radialabschnitt 54 auf, wobei das Kühlmittel ausgehend von dem Kühlmittelzuführkanal 50 in die Nut 64 und ausgehend von der Nut 64 in die Kühlmittelversorgungskanäle 58 strömt. Das Kühlmittel durchströmt die Kühlmittelkanäle 22, 24, 26, 28, 30, 32, 34, 36 und tritt über die Kühlmittelabführkanäle 60, 67 aus den Kühlmittelkanälen 22, 24, 26, 28, 30, 32, 34, 36 aus, wobei das Kühlmittel durch die Rotation des Rotors 2 weggeschleudert wird.

Durch eine derartige Ausgestaltung des Rotors 2 kann auf eine einfache und preisgünstige Weise die Wärmeübertragungsfläche zwischen dem Kühlmittel und dem Rotorblechpaket 10 vergrößert werden und dadurch die Kühlwirkung durch das Kühlmittel erhöht werden.

Es sollte deutlich sein, dass verschiedene konstruktive Änderungen des Rotors 2 denkbar sind, ohne den Schutzbereich des Hauptanspruchs zu verlassen. Beispielsweise kann das Rotorblechpaket 10, die Wuchtscheiben 46, 48 oder die Rotorwelle 44 anders ausgeführt sein.

## Patentansprüche

1. Rotor für eine elektrische Maschine, mit
einem Rotorblechpaket mit mehreren Unterblechpaketen (12, 14, 16, 18), welche jeweils eine Vielzahl von in Stapelrichtung gestapelten Rotorblechen (20) und jeweils mindestens eine in Stapelrichtung ersteckende Durchgangsöffnung (21, 23, 25) aufweisen, wobei die Durchgangsöffnungen (21, 23, 25) der Unterblechpakete (12, 14, 16, 18) sich in Umfangsrichtung überlagern und gemeinsam mindestens einen Kühlmittelkanal (24, 28, 32, 36) bilden,
wobei ein erstes Teilblechpaket (12) eine einen Kühlmitteleinlass (27) bildende erste Durchgangsöffnung (21) und eine einen Kühlmittelauslass (29) bildende, zweite Durchgangsöffnung (23) aufweist, wobei beide Durchgangsöffnungen (21, 23) des ersten Teilblechpakets (12) sich mit einer einzigen, dritten Durchgangsöffnung (25) eines zweiten Teilblechpakets (14) überlagern, wobei die dritte Durchgangsöffnung (25) des zweiten Teilblechpakets (14) an der dem ersten Teilblechpaket (12) abgewandten Seite geschlossen ist.

2. Rotor nach Anspruch 1,
**dadurch gekennzeichnet, dass**
der mindestens eine Kühlmittelkanal (24, 28, 32, 36) einen u-förmigen Verlauf aufweist.

3. Rotor nach Anspruch 1 oder 2,
**dadurch gekennzeichnet, dass**
ein drittes Teilblechpaket (16) vorgesehen ist, welches an der dem ersten Teilblechpaket (12) abgewandten Seite des zweiten Teilblechpakets (14) angeordnet ist, wobei das dritte Teilblechpaket (16) im Bereich der dritten Durchgangsöffnung (25) des zweiten Teilblechpakets (14) eine geschlossene Fläche aufweist.

4. Rotor nach einem der vorhergehenden Ansprüche,
**dadurch gekennzeichnet, dass**
zwischen dem ersten Teilblechpaket (12) und dem zweiten Teilblechpaket (14) mindestens ein weiteres Teilblechpaket (18) angeordnet ist, wobei das mindestens eine weitere Teilblechpaket (18) eine erste Durchgangsöffnung (21) und eine zweite Durchgangsöffnung (23) aufweist, welche sich mit den Durchgangsöffnungen (21, 23) des ersten Teilblechpakets (12) und der Durchgangsöffnung (25) des zweiten Teilblechpakets (14) derart überlagern, dass die Durchgangsöffnungen (21, 23, 25) aller Teilblechpakete den gemeinsamen Kühlmittelkanal (24, 28, 32, 36) begrenzen.

5. Rotor nach einem der vorhergehenden Ansprüche,
**dadurch gekennzeichnet, dass**
alle Teilblechpakete (12, 14, 16, 18) identisch ausgeführt sind, wobei jedes Teilblechpaket (12, 14, 16, 18) jeweils mindestens eine erste Durchgangsöffnung (21), mindestens eine zweite Durchgangsöffnung (23) und mindestens eine dritte Durchgangsöffnung (25) aufweisen, wobei die Teilblechpakete (12, 14, 16, 18) in Umfangsrichtung derart versetzt zueinander angeordnet sind, dass die Durchgangsöffnungen (21, 23, 25) der Teilblechpakete (12, 14, 16, 18) gemeinsam mindestens einen Kühlmittelkanal (24, 28, 32, 36) begrenzen.

6. Rotor nach einem der vorhergehenden Ansprüche,
**dadurch gekennzeichnet, dass**
an einem durch das erste Teilblechpaket (12) bildenden, ersten Axialende des Rotorblechpakets (10) eine erste Wuchtscheibe (46) angeordnet ist, wobei die erste Wuchtscheibe (46) mindestens einen radial erstreckende und mit einem Kühlkreislauf fluidisch verbindbaren Kühlmittelversorgungskanal (58) und einen Kühlmittelabführkanal (60) aufweist, wobei der Kühlmittelversorgungskanal (58) und der Kühlmittelabführkanal (60) mit dem Kühlmittelkanal (24, 28, 32, 36) fluidisch verbunden ist.

7. Rotor nach Anspruch 6,
**dadurch gekennzeichnet, dass**
die erste Wuchtscheibe (46) an einer dem erste Teilblechpaket (12) zugewandten Seite mindestens eine radial erstreckende Nut (62) aufweist, wobei die Nut (62) und eine der ersten Wuchtscheibe (46) zugewandten Fläche des ersten Teilblechpakets (12) den Kühlmittelversorgungskanal (58) begrenzen.

8. Rotor nach einem der vorhergehenden Ansprüche,
**dadurch gekennzeichnet, dass**
alle Teilblechpakete (12, 14, 16, 18) mehrere erste Durchgangsöffnungen (21), mehrere zweite Durchgangsöffnungen (23) und mehrere dritte Durchgangsöffnungen (25) aufweisen, wobei die Teilblechpakete (12, 14, 16, 18) derart in Umfangsrichtung versetzt zueinander angeordnet sind, dass mindestens ein erster Kühlmittelkanal (24, 28, 32, 36) und mindestens ein zweiter Kühlmittelkanal (22, 26, 30, 34) ausgebildet sind, wobei der erste Kühlmittelkanal (24, 28, 32, 36) durch die erste Durchgangsöffnung (21), die zweite Durchgangsöffnung (23) zumindest eines Teilblechpakets (12, 14, 16) und die dritte Durchgangsöffnung (25) eines anderen Teilblechpakets (12, 14, 16) gebildet ist und der zweite Kühlmittelkanal (24, 28, 32, 36) ausschließlich durch die dritten Durchgangsöffnungen (25) zumindest zweier Teilblechpakete (12, 14, 16) oder durch die erste oder zweite Durchgangsöffnung (21, 23) zumindest eines Teilblechpakets (12, 14, 16, 18) und eine dritte Durchgangsöffnung (25) zumindest des anderen Teilblechpakets (12, 14, 16, 18) gebildet sind, wobei der erste Kühlmittelkanal (24, 28, 32, 36) an einem einzigen Axialende den Kühlmitteleinlass (27) und einen Kühlmittelauslass (29) aufweist und der zweite Kühlmittelkanal (22, 26, 30, 34) an einem der beiden Axialenden einen Kühlmitteleinlass (31) und an dem anderen Axialende einen Kühlmittelauslass (33) aufweist.

9. Rotor nach Anspruch 8,
**dadurch gekennzeichnet, dass**
an dem der ersten Teilblechpaket (12) abgewandten Seite des zweiten Teilblechpakets (14) eine zweite Wuchtscheibe (48) angeordnet ist, wobei die zweite Wuchtscheibe (48) einen Kühlmittelabführkanal (66) aufweist, wobei der Kühlmittelabführkanal (66) und ein an der ersten Wuchtscheibe (46) vorgesehener Kühlmittelversorgungskanal (58) mit dem zweiten Kühlmittelkanal (22, 26, 30, 34) fluidisch verbunden sind.

10. Rotor nach einem der Ansprüche 6 bis 9,
**dadurch gekennzeichnet, dass**
ein Rotorwelle (44) vorgesehen ist, wobei an einer Außenumfangsfläche der Rottorwelle (44) das Rotorblechpaket (10) befestigt ist, wobei die Rotorwelle (44) einen Kühlmittelzuführkanal (50) aufweist, welcher über den Kühlmittelversorgungskanal (58) mit dem Kühlmittelkanal (22, 24, 26, 28, 30, 32, 34) fluidisch verbunden ist.

11. Rotor nach Anspruch 10,
**dadurch gekennzeichnet, dass**
der Kühlmittelzuführkanal (50) einen von einer Stirnseite erstreckenden Axialabschnitt (52) und einen Radialabschnitt (54) aufweist, wobei der Radialabschnitt (54) sich von dem Axialabschnitt (52) bis zu der Außenumfangsfläche der Rotorwelle (44) erstreckt.

12. Rotor nach einem der vorhergehenden Ansprüche,
**dadurch gekennzeichnet, dass**
eine Mehrzahl von in Umfangsrichtung zueinander versetzten Magnet-Durchgangsöffnungen (40) zur Aufnahme von Permanentmagneten vorgesehen sind.

## Claims

1. Rotor for an electric machine, comprising
a rotor laminate stack with a plurality of laminate sub-stacks (12, 14, 16, 18) which each comprise a multiplicity of rotor laminates (20) stacked in the stacking direction and each have at least one through opening (21, 23, 25) extending in the stacking direction, wherein the through openings (21, 23, 25) of the laminate sub-stacks (12, 14, 16, 18) overlap in the circumferential direction and together form at least one coolant channel (24, 28, 32, 36), wherein
a first laminate sub-stack (12) comprises a first through opening (21) forming a coolant inlet (27) and a second through opening (23) forming a coolant outlet (29), wherein both through openings (21, 23) of the first laminate sub-stack (12) overlap with a single, third through opening (25) of a second laminate sub-stack (14), wherein the third through opening (25) of the second laminate sub-stack (14) is closed on the side facing away from the first laminate sub-stack (12).

2. Rotor according to claim 1,
**characterized in that**
the at least one coolant channel (24, 28, 32, 36) comprises a U-shaped configuration.

3. Rotor according to claim 1 or 2,
**characterized in that**
a third laminate sub-stack (16) is provided, which is arranged on that side of the second laminate sub-stack (14) that faces away from the first laminate sub-stack (12), wherein the third laminate sub-stack (16) comprises a closed surface in the region of the third through opening (25) of the second laminate sub-stack (14).

4. Rotor according to one of the preceding claims,
**characterized in that**
at least one further laminate sub-stack (18) is arrange between the first laminate sub-stack (12) and the second laminate sub-stack (14), wherein the at least one further laminate sub-stack (18) comprises a first through opening (21) and a second through opening (23), which overlap with the through openings (21, 23) of the first laminate sub-stack (12) and the through opening (25) of the second laminate sub-stack (14) in such a way that the through openings (21, 23, 25) of all the laminate sub-stacks define the common coolant channel (24, 28, 32, 36).

5. Rotor according to one of the preceding claims,
**characterized in that**
all the laminate sub-stacks (12, 14, 16, 18) are configured identically, wherein each laminate sub-stack (12, 14, 16, 18) comprises at least one first through opening (21), at least one second through opening (23) and at least one third through opening (25), the laminate sub-stacks (12, 14, 16, 18) being arranged on the circumference offset from one another in such a way that the through openings (21, 23, 25) of the laminate sub-stacks (12, 14, 16, 18) together define at least one coolant channel (24, 28, 32, 36).

6. Rotor according to one of the preceding claims,
**characterized in that**
a first balancing disc (46) is arranged on a first axial end, forming by means of the first laminate sub-stack (12), of the rotor laminate stack (10), wherein the first balancing disc (46) comprises at least one coolant supply channel (58), which extends radially and can be connected in fluidic terms to a coolant circuit, and a coolant discharge channel (60), wherein the coolant supply channel (58) and the coolant discharge channel (60) are fluidically connected to the coolant channel (24, 28, 32, 36).

7. Rotor according to claim 6,
**characterized in that**
the first balancing disc (46) comprises at least one radially extending groove (62) on a side facing the first laminate sub-stack (12), wherein the groove (62) and a surface of the first laminate sub-stack (12) facing the first balancing disc (46) define the coolant supply channel (58).

8. Rotor according to one of the preceding claims,
**characterized in that**
all laminate sub-stacks (12, 14, 16, 18) comprise a plurality of first through openings (21), a plurality of second through openings (23) and a plurality of third through openings (25), wherein the laminate sub-stacks (12, 14, 16, 18) are arranged on the periphery offset relative to one another in such a way that at least one first coolant channel (24, 28, 32, 36) and at least one second coolant channel (22, 26, 30, 34) are formed, wherein the first coolant channel (24, 28, 32, 36) extends through the first through opening (21), the second through opening (23) of at least one laminate sub-stack (12, 14, 16) and the third through opening (25) of another laminate sub-stack (12, 14, 16), and the second coolant channel (24, 28, 32, 36) is formed exclusively by the third through openings (25) of at least two laminate sub- sub-stacks (12, 14, 16) or by the first or second through opening (21, 23) of at least one laminate sub-stack (12, 14, 16, 18) and a third through opening (25) of at least the other laminate sub-stack (12, 14, 16, 18), wherein the first coolant channel (24, 28, 32, 36) comprises the coolant inlet (27) and a coolant outlet (29) at a single axial end and the second coolant channel (22, 26, 30, 34) comprises a coolant inlet (31) at one of the two axial ends and a coolant.

9. Rotor according to claim 8,
**characterized in that**
a second balancing disc (48) is arranged on that side of the second laminate sub-stack (14) which faces away from the first laminate sub-stack (12), wherein the second balancing disc (48) comprises a coolant discharge channel (66), wherein the coolant discharge passage (66) and a coolant supply passage (58) provided on the first balance plate (46) are fluidically connected to the second coolant passage (22, 26, 30, 34).

10. Rotor according to one of claims 6 to 9,
**characterized in that**
a rotor shaft (44) is provided, wherein the rotor laminate stack (10) is attached to an outer circumferential surface of the rotor shaft (44), wherein the rotor shaft (44) comprises a coolant supply channel (50) which is fluidically connected to the coolant channel (22, 24, 26, 28, 30, 32, 34) via the coolant supply channel (58).

11. Rotor according to claim 10,
**characterized in that**
the coolant supply passage (58) comprises an axial portion (52) extending from an end face and a radial portion (54), wherein the radial portion (54) extends from the axial portion (52) to the outer circumferential surface of the rotor shaft (44).

12. Rotor according to one of the preceding claims,
**characterized in that**
a plurality of magnet through openings (40) are provided, which are offset from one another in the circumferential direction and are intended for accommodating permanent magnets.

## Revendications

1. Rotor pour une machine électrique, comprenant
un paquet de tôles de rotor comprenant plusieurs sous-paquets de tôles (12, 14, 16, 18), qui comprend respectivement une pluralité de tôles de rotor (20) empilées dans la direction d'empilement et respectivement au moins une ouverture de passage (21, 23, 25) s'étendant dans la direction d'empilement, les ouvertures de passage (21, 23, 25) des sous-paquets de tôles (12, 14, 16, 18) se superposant dans le sense circonférentiel et formant ensemble au moins un canal de fluide de refroidissement (24, 28, 32, 36),
dans lequel
un premier sous-paquet de tôles (12) comprend une première ouverture de passage (21) formant une entrée de fluide de refroidissement (27) et une deuxième ouverture de passage (23) formant une sortie de fluide de refroidissement (29), les deux ouvertures de passage (21, 23) du premier sous-paquet de tôles (12) se superposant avec une troisième ouverture de passage (25) unique d'un deuxième sous-paquet de tôles (14), la troisième ouverture de passage (25) du deuxième sous-paquet de tôles (14) étant fermée sur le côté opposé au premier sous-paquet de tôles (12).

2. Rotor selon la revendication 1,
**caractérisé en ce que**
l'au moins un canal de fluide de refroidissement (24, 28, 32, 36) a un tracé en forme de U.

3. Rotor selon la revendication 1 ou 2,
**caractérisé en ce que**
un troisième sous-paquet de tôles (16) est prévu, qui est disposé sur le côté du deuxième sous-paquet de tôles (14) opposé au premier sous-paquet de tôles (12), le troisième sous-paquet de tôles (16) a une surface fermée dans la zone de la troisième ouverture de passage (25) du deuxième sous-paquet de tôles (14).

4. Rotor selon l'une des revendications précédentes,
**caractérisé en ce que**
entre le premier sous-paquet de tôles (12) et le deuxième sous-paquet de tôles (14) est disposé au moins un autre sous-paquet de tôles (18), l'au moins un autre sous-paquet de tôles (18) ayant une première ouverture de passage (21) et une deuxième ouverture de passage (23), qui se superposent aux ouvertures de passage (21, 23) du premier sous-paquet de tôles (12) et à l'ouverture de passage (25) du deuxième sous-paquet de tôles (14) de telle sorte que les ouvertures de passage (21, 23, 25) de tous les sous-paquets de tôles délimitent le canal de fluide de refroidissement (24, 28, 32, 36) commun.

5. Rotor selon l'une des revendications précédentes,
**caractérisé en ce que**
tous les sous-paquets de tôles (12, 14, 16, 18) sont réalisés de manière identique, chaque sous-paquet de tôles (12, 14, 16, 18) comprenant respectivement au moins une première ouverture de passage (21), au moins une deuxième ouverture de passage (23) et au moins une troisième ouverture de passage (25), les sous-paquets de tôles (12, 14, 16, 18) étant disposés de manière décalée les uns par rapport aux autres dans le sense circonférentiel de telle sorte que les ouvertures de passage (21, 23, 25) des sous-paquets de tôles (12, 14, 16, 18) délimitent ensemble au moins un canal de fluide de refroidissement (24, 28, 32, 36).

6. Rotor selon l'une des revendications précédentes,
**caractérisé en ce que**
sur une première extrémité axiale du paquet de tôles de rotor (10) formée par le premier sous-paquet de tôles (12) est disposé un premier disque d'équilibrage (46), le premier disque d'équilibrage (46) comprenant au moins un canal d'alimentation en fluide de refroidissement (58) s'étendant radialement et pouvant être relié fluidiquement à un circuit de refroidissement et un canal d'évacuation de fluide de refroidissement (60), le canal d'alimentation en fluide de refroidissement (58) et le canal d'évacuation de fluide de refroidissement (60) étant reliés fluidiquement au canal de fluide de refroidissement (24, 28, 32, 36).

7. Rotor selon la revendication 6,
**caractérisé en ce que**
le premier disque d'équilibrage (46) comprend sur un côté tourné vers le premier sous-paquet de tôles (12) au moins une rainure (62) s'étendant radialement, la rainure (62) et une surface du premier sous-paquet de tôles (12) tournée vers le premier disque d'équilibrage (46) délimitant le canal d'alimentation en fluide de refroidissement (58).

8. Rotor selon l'une des revendications précédentes,
**caractérisé en ce que**
tous les sous-paquets de tôles (12, 14, 16, 18) comprennent plusieurs premières ouvertures de passage (21), plusieurs deuxièmes ouvertures de passage (23) et plusieurs troisièmes ouvertures de passage (25), les sous-paquets de tôles (12, 14, 16, 18) étant disposés de manière décalée les uns par rapport aux autres dans le sense circonférentiel de telle sorte qu'au moins un premier canal de fluide de refroidissement (24, 28, 32, 36) et au moins un deuxième canal de fluide de refroidissement (22, 26, 30, 34) sont formés, le premier canal de fluide de refroidissement (24, 28, 32, 36) étant formé par la première ouverture de passage (21), la deuxième ouverture de passage (23) d'au moins un sous-paquet de tôles (12, 14, 16) et la troisième ouverture de passage (25) d'un autre sous-paquet de tôles (12, 14, 16) et le deuxième canal de fluide de refroidissement (24, 28, 32, 36) étant formé exclusivement par les troisièmes ouvertures de passage (25) d'au moins deux sous-paquets de tôles (12, 14, 16) ou par la première ou la deuxième ouverture de passage (21, 23) d'au moins un sous-paquet de tôles (12, 14, 16, 18) et une troisième ouverture de passage (25) d'au moins l'autre sous-paquet de tôles (12, 14, 16, 18), le premier canal de fluide de refroidissement (24, 28, 32, 36) comprenant sur une seule extrémité axiale l'entrée de fluide de refroidissement (27) et une sortie de fluide de refroidissement (29) et le deuxième canal de fluide de refroidissement (22, 26, 30, 34) comprenant sur une des deux extrémités axiales une entrée de fluide de refroidissement (31) et sur l'autre extrémité axiale une sortie de fluide de refroidissement (33).

9. Rotor selon la revendication 8,
**caractérisé en ce que**
sur le côté du deuxième sous-paquet de tôles (14) opposé au premier sous-paquet de tôles (12) est disposé un deuxième disque d'équilibrage (48), le deuxième disque d'équilibrage (48) comprenant un canal d'évacuation de fluide de refroidissement (66), le canal d'évacuation de fluide de refroidissement (66) et un canal d'alimentation en fluide de refroidissement (58) prévu sur le premier disque d'équilibrage (46) étant reliés fluidiquement au deuxième canal de fluide de refroidissement (22, 26, 30, 34).

10. Rotor selon l'une des revendications 6 à 9,
**caractérisé en ce que**
un arbre de rotor (44) est prévu, le paquet de tôles de rotor (10) étant fixé sur une surface périphérique extérieure de l'arbre de rotor (44), l'arbre de rotor (44) comprenant un canal d'alimentation en fluide de refroidissement (50), qui est relié fluidiquement au canal de fluide de refroidissement (22, 24, 26, 28, 30, 32, 34) par le canal d'alimentation en fluide de refroidissement (58).

11. Rotor selon la revendication 10,
**caractérisé en ce que**
le canal d'alimentation en fluide de refroidissement (50) comprend une portion axiale (52) s'étendant depuis un côté frontal et une portion radiale (54), la portion radiale (54) s'étendant depuis la portion axiale (52) jusqu'à la surface périphérique extérieure de l'arbre de rotor (44).

12. Rotor selon l'une des revendications précédentes,
**caractérisé en ce que**
une pluralité d'ouvertures de passage d'aimant (40) décalées les unes par rapport aux autres dans le sense circonférentiel sont prévues pour recevoir des aimants permanents.
